# EUROPÄISCHE PATENTSCHRIFT

(11) **EP 2 539 603 B1**
(45) Veröffentlichungstag und Bekanntmachung des Hinweises auf die Patenterteilung: **12.03.2014**
(21) Anmeldenummer: 11718096.8
(22) Anmeldetag: 06.05.2011
(51) Int. Cl.: F16F 9/05, F16F 9/43

(54) **BELÜFTETER LUFTBALG FÜR EINE LUFTFEDER, EINEN BELÜFTETEN LUFTBALG ENTHALTENDE LUFTFEDER SOWIE BELÜFTETE LUFTBÄLGE ENTHALTENDES LUFTFEDERSYSTEM**
VENTILATED AIR BELLOWS FOR A PNEUMATIC SPRING, PNEUMATIC SPRING CONTAINING A VENTILATED AIR BELLOWS, AND PNEUMATIC SPRING SYSTEM CONTAINING VENTILATED AIR BELLOWS
SOUFFLET VENTILÉ POUR UN RESSORT PNEUMATIQUE, RESSORT PNEUMATIQUE COMPRENANT UN SOUFFLET VENTILÉ ET SYSTÈME DE RESSORTS PNEUMATIQUES COMPRENANT DES SOUFFLETS VENTILÉS

(30) Priorität: 10.05.2010 DE 102010028810
(43) Veröffentlichungstag der Anmeldung: 02.01.2013
(73) Patentinhaber: SAF-HOLLAND GmbH, 63856 Bessenbach (DE)
(72) Erfinder: BÜTTNER, Josef, 63857 Waldaschaff (DE)
(74) Vertreter: Müller Schupfner & Partner
(86) Internationale Anmeldenummer: PCT/EP2011/057317
(87) Internationale Veröffentlichungsnummer: WO 2011/141378

(56) Entgegenhaltungen:
- EP-A2- 0 446 709
- DE-A1- 19 733 281
- JP-A- 11 078 877
- US-A1- 2010 001 444
- US-B1- 6 422 543

## Beschreibung

Die vorliegende Erfindung betrifft einen belüfteten Luftbalg für eine Luftfeder, eine einen belüfteten Luftbalg enthaltene Luftfeder sowie ein Luftfedersystem, welche belüftete Luftbälge enthält.

Herkömmlicherweise besitzt eine Fahrzeugachse eines Nutzfahrzeuges einen Achskörper, der mittels zumindest eines Längslenkers ein Achsaggregat bildet und daher am Fahrzeugrahmen beweglich angelenkt ist und gegenüber dem Fahrzeugrahmen durch jeweils eine über oder hinter dem Kreuzungsbereich von Achskörper und Längslenker angeordnete Luftfeder abgestützt ist. Die Luftfeder ihrerseits umfasst einen zwischen einem Deckel und einer Grundplatte angeordneten Luftbalg, wobei für eine mechanische Kopplung zwischen dem Luftbalg einerseits und dem Achsaggregat andererseits ein am Luftbalg angeordneter Tauchkolben vorgesehen ist. Der Luftbalg ist an seinem achsseitigen Bereich mit dem Tauchkolben verbunden, wobei eine Außenfläche des Tauchkolbens dem Luftbalg als Abrollfläche dient, so dass eine geführte Bewegung des Luftbalgs im Betrieb bei der Auf- und Abbewegung des Tauchkolbens gewährleistet ist.

Für eine Kran- und Bahnverladung sind solche Luftfedern jedoch nur bedingt geeignet, da durch das Gewicht der dann unter dem Fahrzeug hängenden Achse der Luftbalg ohne weitere Haltevorrichtungen vollständig ausgerollt wird, wodurch in dem Luftbalg ein Unterdruck gegenüber der Umgebung erzeugt wird. Beim Absetzen des Fahrzeugs besteht die Gefahr, dass der Luftbalg nach innen einfaltet bzw. gegen den Tauchkolben verkippt bzw. einfaltet und daher nicht betriebsmäßig über den Tauchkolben abrollt, was Beschädigungen zur Folge haben kann.

Um dieses Problem zu umgehen, wird daher herkömmlicherweise bei der Kran- und Bahnverladung der Federweg der Luftfeder anhand einer an dem Fahrzeugrahmen befestigten Spann- bzw. Fangvorrichtung durch eine mechanische Verriegelung begrenzt oder auch ein geteilter Tauchkolben verwendet. Alternativ kann die Luftfeder auch derart ausgebildet sein, dass die Luftfeder lösbar mit dem Aufbau verbunden ist und bei einer Kranverladung des Anhängers mittels eines Rückstellgliedes die Luftfeder von dem Aufbau getrennt wird und mittels des Rückstellgliedes der Deckel und so auch der Federbalg bezüglich des Tauchkolbens in einer definierten Position gehalten wird, so dass der Federbalg über den Tauchkolben abrollt bzw. in einem abgerollten Zustand gehalten wird. Außerdem ist auch die Verwendung von so genannten "Splittern" möglich, wobei die obere Balgbefestigung nicht am Fahrzeugrahmen, sondern an einem schwenkbaren Arm befestigt ist.

Die DE 197 33 281 A1 betrifft eine Luftfeder für Kraftfahrzeuge, insbesondere für für Bahn- und Fährverladungen bestimmte Nutzfahrzeuge, mit einem zwischen dem Fahrzeugrahmen und einem mit einer Fahrzeugachse verbundenen Bauteil angeordneten Luftfederbalg, dessen Inneres beim Anheben des Kraftfahrzeuges für eine Verladung durch ein Rückschlagventil mit der Außenluft verbunden wird.

Die JP 11 078 877 A betrifft eine Luftfedervorrichtung für Kraftfahrzeuge bei der über ein automatisches Höhenregulierungsventil Luft in die Luftfeder eingepumpt oder aus dieser herausgelassen wird um auf diese Weise die Fahrwerkshöhe bestimmen zu können.

Die US 2010/0001444 A1 betrifft eine Luftfeder für ein Fahrzeug, insbesondere für ein Nutzfahrzeug, umfassend einen Luftbalg, der einen achsseitigen und einen aufbauseitigen Bereich, einen Tauchkolben, der an dem achsseitigen Bereich des Luftbalgs angeordnet ist, einen Befestigungsabschnitt um den aufbauseitigen Bereich des Luftbalgs an einem Trägerelement des Fahrzeugs zu befestigen, und ein Verdrängungselement aufweist, wobei das Verdrängungselement in einer ersten Position des Luftbalgs den Raum zwischen dem Tauchkolben und dem Befestigungsabschnitt im Wesentlichen ausfüllt.

Die US 6,422,543 B1 beschreibt eine Luftfederanordnung, umfassend einen Luftfederdeckel und einen Luftfederkolben, die zueinander gegenüberliegend angeordnet sind, und einen Luftfederbalg aus elastomerem Werkstoff, der den Luftfederdeckel und den Luftfederkolben unter Verwendung von Befestigungsmitteln miteinander verbindet sowie einen Anschluss zum Be- und Entlüften des Luftfederinnenraumes.

Dokument EP 0 446 709 A2 zeigt eine Achsaufhängung für eine starre Achse eines Nutzfahrzeuges, wobei zwischen einem Tragarm und einer relativ zu dem Fahrzeugchassis schwenkbaren Schwinge eine Luftfeder angeordnet ist, wobei die Schwinge relativ zum Fahrzeugchassis mittels eines, vorzugsweise pneumatischen Stellgliedes gehoben und gesenkt werden kann.

Der Erfindung liegt die Aufgabe zugrunde, einen Luftbalg für eine Luftfeder, eine einen Luftbalg enthaltene Luftfeder sowie ein Luftfedersystem, welches Luftbälge enthält, bereitzustellen, welche in einfacher Weise für eine Kranverladung von Fahrzeugen geeignet sind.

Diese Aufgabe wird gelöst durch einen belüfteten Luftbalg gemäß Anspruch 1, eine Luftfeder gemäß Anspruch 10 sowie ein Luftfedersystem gemäß Anspruch 11. Bevorzugte Ausführungsformen der Erfindung sind Gegenstand der abhängigen Ansprüche.

Gemäß der vorliegenden Erfindung wird ein belüfteter Luftbalg für eine Luftfeder insbesondere eines Nutzfahrzeugs bereitgestellt. Der Luftbalg umfasst einen achsseitigen Bereich sowie einen aufbauseitigen Bereich, wobei der achsseitige Bereich an einem Tauchkolben anordenbar und durch eine Ein- bzw. Ausfederbewegung zwischen einer ersten, eingefederten, Position und einer zweiten, ausgefederten Position bewegbar ist. Der Luftbalg umschließt einen Innenraum, der über eine an eine Druckluftleitung angeschlossene Druckluftöffnung mit Druckluft befüllt werden kann. Erfindungsgemäß weist der Luftbalg ein Ventil zur Belüftung des Innenraums auf, welches mit der Atmosphäre in Verbindung steht und durch den im Innenraum vorhandenen Druck in seine Schließstellung beaufschlagt werden kann wobei sich das Ventil vollständig innerhalb einer im bzw. am Tauchkolben vorgesehen Kammer befindet. Das Ventil mündet in anderen Worten an seiner Außenseite in die Umgebung, die unter Atmosphärendruck steht, und die Innenseite des Ventils mündet in den Innenraum des Luftbalgs. Unter dem Begriff "Nutzfahrzeug" im Sinne dieser Erfindung sollen nicht nur Zugfahrzeuge wie beispielsweise LKWs oder Sattelzugmaschinen verstanden werden, sondern auch deren Anhänger bzw. Sattelauflieger. Die achsseitige Lagerung der Luftfeder kann unterschiedlich positioniert sein. Die achsseitige Lagerung kann eine Tauchkolbenbefestigung oder ein Luftfederträger sein. Der Luftfederträger kann beispielsweise an einem Lenker des Achsaggregats angeordnet sein. Der achsseitige Bereich des Luftbalgs im Sinne dieser Erfindung ist der Endbereich des Luftbalgs, der mittels des Tauchkolbens und gegebenenfalls weiterer Anordnungsmittel mit der achsseitigen Lagerung der Luftfeder verbunden ist, d.h. der Bereich des Luftbalgs, der an dem Tauchkolben angeordnet ist. Der aufbauseitige Bereich des Luftbalgs ist der Bereich des Luftbalgs, welcher mittels eines Deckels und gegebenenfalls weiterer Anordnungsmittel mit dem Aufbau verbunden ist. Ein erfindungsgemäßer Luftbalg kann sich in verschiedenen Zuständen befinden. In einem Grundzustand des Luftbalgs wirken keine äußeren Fremdkräfte wie beispielsweise Zug-, Schub- und/oder Scherkräfte auf den Luftbalg ein. Insbesondere ist der Grundzustand des Luftbalgs der Zustand, in dem sich der Luftbalg befindet, wenn der in einer Luftfeder eingebaute Luftbalg beispielsweise einmal mittels Press- bzw. Druckluft aufgeblasen wird und die Pressluft anschließend wieder aus der Luftfeder abgelassen wird, d.h. dass in dem Inneren der Luftfeder wieder Umgebungsdruck herrscht. Im Grundzustand wird an der Luftfeder nach dem Aufblasen, abgesehen von ihrer eigenen Gewichtskraft, keine weitere Kraft angelegt. Der Luftbalg kann auch verschiedene Betriebszustände aufweisen. Einer dieser Betriebszustände liegt beispielsweise vor, wenn die Luftfeder im herkömmlichen Betrieb angeordnet ist, wobei beispielsweise der Innendruck in dem Luftbalg von dem Umgebungsdruck verschieden ist. Ein solcher Betriebszustand liegt beispielsweise dann vor, wenn sich das Fahrzeug im herkömmlichen Einsatz befindet. Im Einsatz kann der Luftbalg im Zuge von Ein- und Ausfederbewegungen in eine erste Position, in welcher er - ggf. sogar vollständig - eingefedert ist, sowie in eine zweite Position, in welcher er - ggf. sogar vollständig - ausgefedert ist, bewegt werden. Ein anderer Betriebszustand ist ein Zustand, in dem der Luftbalg entlüftet ist, wenn beispielsweise das Fahrzeug, wie z.B. ein Anhänger eines LKWs, an dem die Luftfeder angeordnet ist, für längere Zeit geparkt ist. In diesem Fall herrscht in dem Inneren des Luftbalgs, wie im Grundzustand, der Umgebungsdruck, und der Luftbalg befindet sich in der ersten Position. In diesem Betriebszustand des Luftbalgs ist die Länge der Luftfeder regelmäßig kleiner als die Länge der Luftfeder im Grundzustand des Luftbalgs. Weiterhin kann der Luftbalg einen Verladezustand aufweisen, wobei der Verladezustand dann vorliegt, wenn das Fahrzeug beispielsweise auf einen Eisenbahnwaggon kranverladen wird, d.h. das Achsaggregat an der Luftfeder hängt. In diesem Fall befindet sich der Luftbalg in der zweiten Position. In dem Verladezustand des Luftbalgs ist die Luftfeder entlang ihrer Mittellinie gemessen regelmäßig länger als in dem Grundzustand des Luftbalgs. Wird die Luftfeder im Betriebszustand des Luftbalgs mit einem sehr hohen Innendruck beaufschlagt, ist es auch möglich, dass die Luftfeder die gleichen Abmessungen aufweist wie im Verladezustand des Luftbalgs. Der Luftbalg kann sich auch dann in seinem Grundzustand befinden, wenn er beispielsweise von dem Tauchkolben entkoppelt ist, d.h. beispielsweise der Luftbalg alleine gelagert ist. Wird ein Anhänger, an welchem die Luftfeder angeordnet ist, auf einen Bahnwaggon, eine Fähre oder ähnliches verladen, wird beim Anheben des Anhängers über das Chassis bzw. den Aufbau aufgrund des Achsgewichtes der Luftbalg im Wesentlichen vollständig gestreckt. Dabei wird einerseits durch die Abnahme des Innendrucks aufgrund der Streckung des Luftbalgs das Ventil bei Unterschreitung eines bestimmten Drucks - vorzugsweise etwa unter 0,9 bar, besonders vorzugsweise etwa unter 0,8 bar - geöffnet, so dass Luft aus der Atmosphäre bzw. der Umgebung in den Innenraum des Luftbalgs einströmen kann. Somit wird zuverlässig verhindert, dass sich in dem Luftbalg ein Balgunterdruck oder nicht ausreichender Druck ausbildet und sich der Luftbalg undefiniert einfaltet bzw. verkippt und eventuell beschädigt wird. Andererseits wird auch die Einrollbewegung des Luftbalgs nicht behindert, da der Innenraum des Luftbalgs nach erneutem Absetzen des Fahrzeugs durch die Einrollbewegung des Luftbalgs nur geringfügig erhöht ist. Daher ist jederzeit ein funktionssicheres Abrollen des Luftbalgs auf dem Tauchkolben auch ohne Druckbeaufschlagung des Luftbalgs durch eine Druckluftquelle gewährleistet. Somit nimmt bei einem Aufsetzen des Anhängers auf den Bahnwaggon bzw. auf die Fähre der Luftbalg automatisch fast wieder den gleichen Zustand wie vor dem Anheben ein. Dieser Zustand kann beispielsweise der Grundzustand sein, wenn insbesondere der Luftbalg entlüftet ist, bzw. ein von dem Grundzustand abweichender Zustand, wenn der Luftbalg beispielsweise mit einem Innendruck beaufschlagt ist. In anderen Worten kann der Luftbalg bei einer Verladung des Anhängers auf einem Bahnwaggon bzw. eine Fähre beim Anheben des Anhängers im Wesentlichen vollständig gestreckt werden. Wird der Anhänger auf den Bahnwaggon bzw. der Fähre abgesetzt, rollt der Luftbalg über den Tauchkolben ab, da aufgrund der über das Ventil zusätzlich zugeströmten Luft ein ausreichender Innendruck in dem Luftbalg vorherrscht. Ein Verkippen bzw. ein Einfalten des Luftbalgs wird dadurch verhindert. Vorteilhafterweise ist es erfindungsgemäß daher nicht notwendig, den maximalen Ausfederweg beim Verladen, beispielsweise anhand eines Fangseils als bevorzugte Fang- bzw. Spannvorrichtung, zu begrenzen. Insbesondere ist es vorteilhafterweise auch nicht notwendig, den Tauchkolben geteilt auszubilden. Vielmehr werden aufgrund des erfindungsgemäßen belüfteten Luftbalgs die Probleme des Standes der Technik in einfacher Weise gelöst. Erfindungsgemäß wird durch das Ventil eine einfache und sichere Belüftung des Luftbalgs gewährleistet. Außerdem reagiert jeder Luftbalg am Fahrzeug unabhängig von den Druckverhältnissen der übrigen Luftbälge, da jeder Luftbalg durch das Ventil eine eigene Befüllung aufweist.

Gemäß einer bevorzugten Weiterbildung der Erfindung ist das Ventil ein Einwegeventil und somit von konstruktiv einfacher Bauweise. In anderen Worten ist das Ventil derart ausgebildet, dass es den Fluid- bzw. Gas- bzw. Luftfluß in lediglich einer Richtung zulässt.

Alternativ oder zusätzlich kann das Ventil in einem Endabschnitt montiert sein, welcher den aufbauseitigen Bereich des Luftbalgs abschließt. Das Ventil ist somit nicht am Balg selbst sondern an einem anderen an diesem festgelegten Teil angeordnet.

Es ist vorteilhaft, wenn das Ventil in dem Tauchkolben montiert ist, welcher fest mit dem Luftbalg verbunden ist. Hierdurch kann eine jederzeit eindeutig definierte Position des Ventils sichergestellt werden. Dabei ist es bevorzugt, wenn das Ventil in einem Endabschnitt montiert ist, mit dem der Tauchkolben an seinem aufbauseitigem Bereich abgeschlossen ist.

Es kann von Vorteil sein, wenn der Luftbalg zumindest im Wesentlichen rotationssymmetrisch zu einer Symmetrieachse ausgebildet ist und sich das Ventil auf der Symmetrieachse befindet. Dabei soll "zumindest im Wesentlichen rotationssymmetrisch" bedeuten, dass keine perfekte Rotationssymmetrie vorhanden sein muss, sondern dass der Luftbalg in seinem wesentlichen Aufbau rotationssymmetrisch ist, während einzelne Bestandteile wie beispielsweise Befestigungsmittel oder die Öffnung für den Anschluss an die Druckluftleitung, dezentral und damit die Rotationssymmetrie störend angeordnet sind bzw. sein können.

Gemäß einem vorteilhaften Ausführungsbeispiel ist das Ventil als Einwegeventil aufgebaut, bei dem eine Düse von einem elastischen Schlauch umgeben ist, der die Öffnung der Düse bei entsprechenden Druckverhältnissen verschließen kann. In anderen Worten umfasst das Ventil eine durch einen elastischen Schlauch gebildete Düse, deren Öffnung durch Kontraktion eines Endes des elastischen Schlauchs verschließbar ist. Das freiliegende Ende des Schlauches ragt hierbei in den bzw. endet in dem Innenraum des Luftbalgs. "Kontraktion" ist insbesondere dahingehend zu verstehen, dass die Innenflächen des Schlauchs aufeinander aufliegen, d. h. der Schlauch im Wesentlichen die Form von zwei aufeinanderliegenden Bahnen besitzt.

Gemäß einem weiteren vorteilhaften Ausführungsbeispiel der Erfindung umfasst das Ventil ein Verschlussteil für mindestens eine Luftdurchtrittsöffnung. Das Verschlussteil ist zumindest im Wesentlichen tellerförmig, also ggf. mit hiervon etwas abweichender Form ausgebildet und in Axialrichtung des Luftbalgs beweglich. Die Axialrichtung ist dabei diejenige Richtung, in der sich der Luftbalg hauptsächlich ein- und ausrollt. In anderen Worten wird die mindestens eine Luftdurchtrittsöffnung des Ventils in dessen Schließstellung von dem tellerförmigen Verschlussteil verschlossen, während die mindestens eine Luftdurchtrittsöffnung nach einem axialen Versatz des Verschlussteils offen ist und einen Zutritt zum Innenraum des Luftbalgs schafft.

Gemäß einem anderen vorteilhaften Ausführungsbeispiel der Erfindung umfasst das Ventil eine elastische Membran zum Verschließen mindestens einer Luftdurchtrittsöffnung.
Es ist dabei von Vorteil, wenn das Ventil eine zweckmäßigerweise über den Umriss des Luftbalgs hinausragende Abdeckung aufweist, welche zwar einerseits den Luftzutritt nicht beeinträchtigt, jedoch das Eindringen von Fremdkörpern wie beispielsweise Staub verhindert oder zumindest weitgehend ausschließt.

Erfindungsgemäß befindet sich das Ventil vollständig innerhalb einer Kammer, die in dem Tauchkolben - beispielsweise in dem aufbauseitigem Endabschnitt oder dem aufbauseitigen Bereich - befindet. Hierbei ist zum einen das Ventil besser vor mechanischen Beschädigungen geschützt, da es sich gleichsam in einem Gehäuse befindet. Zum anderen ist durch diese Einkapselung ein besserer Schutz vor Fremdkörpern wie Schmutz, etc. gewährleistet. Die Kammer ist zweckmäßigerweise kein in sich abgeschlossener Raum, sondern ist zu der Umgebung offen, um einen Luftaustausch zwischen Umgebung und Innenraum des Balgs über das Ventil zu ermöglichen. Die Kammer kann hierbei durch eine Oberfläche des Tauchkolbens - vorzugsweise im Bereich dessen Endabschnitts - begrenzt sein, die dem Innenraum des Balgs zugewandt ist. Zweckmäßigerweise wird die Kammer zum Innenraum des Balgs durch ein das Ventil überdeckendes Pufferelement begrenzt. Alternativ kann die Kammer durch eine Oberfläche des Tauchkolbens - vorzugsweise im Bereich dessen Endabschnitts - begrenzt sein, die dem Innenraum des Balgs abgewandt ist, so dass die Kammer vorzugsweise im Wesentlichen durch den Tauchkolben selbst gebildet ist bzw. sich das Ventil innerhalb des hohlen Tauchkolben befindet. Es ist auch eine Kombination dieser beiden Varianten möglich.

Die der Erfindung zugrunde liegende Aufgabe wird auch mit einer Luftfeder gelöst, die einen Tauchkolben und einen mit dem Tauchkolben fest verbundenen Luftbalg umfasst, wobei die Luftfeder mit einer Druckluftquelle verbunden ist. Der Luftbalg ist dabei so ausgebildet, wie es vorstehend beschrieben ist. Somit gelten für die den Luftbalg enthaltende Luftfeder die gleichen Vorteile wie für den belüfteten Luftbalg.

Das der Erfindung zugrunde liegende Problem wird ferner gelöst mit einem Luftfedersystem, welches eine Mehrzahl der vorstehend genannten Luftfedern sowie zumindest eine Druckluftquelle aufweist, wobei zumindest ein Teil der Luftfedern mit der gleichen Druckluftquelle verbunden ist. Üblicherweise ist nur eine einzige Druckluftquelle vorhanden, welche alle der Luftfedern mit Druckluft versorgt. In bestimmten Fällen kann es auch ratsam sein, mehrere Druckluftquellen vorzusehen, um beispielsweise die linke und rechte Seite eines Fahrzeugs bzw. eines Anhängers getrennt versorgen und beispielsweise eine einseitige Beladung ausgleichen zu können. Auch für das Luftfedersystem gelten die gleichen Vorteile, wie sie in Zusammenhang mit dem Luftbalg beschrieben worden sind.

Weitere Vorteile, Merkmale und Besonderheiten der Erfindung ergeben sich aus der nachfolgenden ausführlichen Beschreibung vorteilhafter Ausführungsformen der Erfindung, wobei einzelne Merkmale verschiedener Ausführungsformen zu neuen Ausführungsformen kombiniert werden können.

Es zeigen jeweils in axialem Querschnitt:
- Fig. 1: eine erste Ausführungsform des erfindungsgemäßen Luftbalgs mit einem Ventil in offener Stellung,
- Fig. 2: die erste Ausführungsform mit geschlossenem Ventil,
- Fig. 3: eine zweite Ausführungsform des erfindungsgemäßen Luftbalgs mit einem Ventil in geschlossener Stellung,
- Fig. 4: die zweite Ausführungsform mit Ventil in offener Stellung,
- Fig. 5: eine dritte Ausführungsform des erfindungsgemäßen Luftbalgs mit einem Ventil in geschlossener Stellung,
- Fig. 6: die dritte Ausführungsform mit Ventil in offener Stellung,
- Fig. 7: eine vierte Ausführungsform des erfindungsgemäßen Luftbalgs mit einem Ventil in geschlossener Stellung,
- Fig. 8: die vierte Ausführungsform mit Ventil in offener Stellung,
- Fig. 9: eine fünfte Ausführungsform des erfindungsgemäßen Luftbalgs mit einem Ventil in geschlossener Stellung,
- Fig. 10: die fünfte Ausführungsform mit Ventil in offener Stellung,
- Fig. 11: eine sechste Ausführungsform des erfindungsgemäßen Luftbalgs mit einem Ventil in geschlossener Stellung, und
- Fig. 12: die sechste Ausführungsform mit Ventil in offener Stellung.

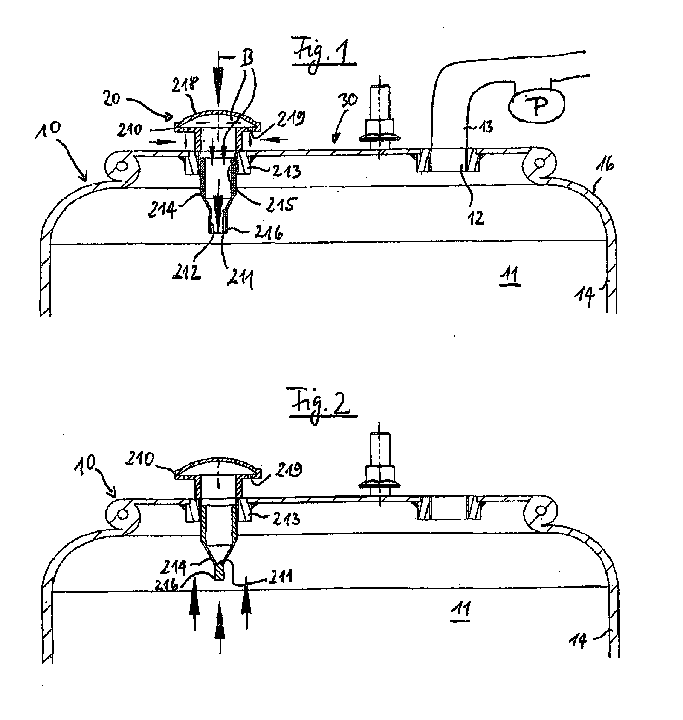

Die in Fig. 1 und Fig. 2 gezeigte Luftfeder 10 umfasst einen Luftbalg 14 mit einem oberen, aufbauseitigen Bereich 16, dessen oberes Ende durch einen Endabschnitt 30 verschlossen ist. Über eine im oberen Abschnitt 30 vorgesehene Druckluftöffnung 12 wird der Innenraum 11 des Luftbalgs 14 mittels einer Druckluftleitung 13 und einer nur schematisch dargestellten Druckluftquelle P mit Druckluft versorgt.

Zur Belüftung des Innenraums ist - bei dieser ersten Ausführungsform dezentral, also nicht auf der Symmetrieachse - ein Ventil 20 vorgesehen, das als Einwegeventil 210 ausgestaltet ist. Das Ventil 210 umfasst eine in den Innenraum 11 hineinragende, aus einem elastischen Schlauch 214 gebildete Düse 212 mit einer Öffnung 211. Der elastische Schlauch 214 ist an seinem ersten, aufbauseitigen Ende 215 in einem Ventilsitz 213 gehaltert. An seinem zweiten, achsseitigen Ende 216 ist der elastische Schlauch 214 so ausgestaltet, dass er sich soweit durch seine Eigenspannung zusammenzieht bzw. kontrahiert, dass er keinen axialen Luftdurchtritt zulässt. Dieser Zustand ist in Fig. 2 gezeigt. Bei einem im Innenraum 11 vorhandenen Druck, der größer als der Druck im Außenbereich ist, wird außerdem das Ventil 210 zusätzlich in die Schließstellung beaufschlagt.

An der Oberseite des Endabschnitts 30 befindet sich eine kuppelförmige hohle Abdeckung 218, an deren Unterseite Luftdurchtrittsöffnungen 219 vorgesehen sind, durch die Luft in das Innere der Abdeckung 218 strömen kann. Der elastische Schlauch 214 ist dabei so ausgelegt, dass er sich, sobald der Druck im Innenraum 11 unter ein bestimmtes Maß abfällt und somit ein Überdruck auf der Außenseite besteht, an seinem zweiten Ende 216 aufweitet und eine Öffnung 211 freigibt, durch die Luft aus der Umgebung bzw. dem Außenraum in den Innenraum 11 strömen kann. Diese Situation tritt dann ein, wenn beispielsweise ein mit einem solchen Luftbalg ausgestattetes Fahrzeug durch einen Kran angehoben wird und der Luftbalg ausrollt, somit sein Volumen größer und dementsprechend sein Innendruck kleiner wird. Durch das Nachströmen der Luft, welches in Fig. 1 durch Pfeile B angedeutet ist, aus dem Außenraum in den Innenraum 11 kann somit zuverlässig verhindert werden, dass sich in dem Luftbalg 14 ein Unterdruck bildet, der ein ordnungsgemäßes Ein- bzw. Ausrollen des Luftbalgs 14 behindern würde. Erfindungsgemäß kann ein derartiger Druckausgleich durch das Ventil 20 bzw. 210 unabhängig von der Druckluftquelle P und damit unabhängig von der jeweiligen Betriebssituation eines mit der Luftfeder ausgestatteten Fahrzeugs gewährleistet werden. Sobald sich in dem Innenraum 11 genügend Druck aufgebaut hat, kontrahiert sich der elastische Schlauch 214 an seinem elastischen Ende 216 wieder und verschließt somit die Öffnung 211. Der auf das Ventil 210 einwirkende Druck ist in Fig. 2 mit Pfeilen A angedeutet. Aufgrund der Ausgestaltung des Ventils 210 als Einwegeventil kann Luft nicht aus dem Innenraum 11 herausgepresst werden. Es ist festzuhalten, dass unter dem Begriff "Düse" nicht notwendigerweise ein Luftdurchlassabschnitt mit sich verringerndem Querschnitt - wie er in Fig. 1 und 2 gezeigt ist - verstanden werden soll, sondern ein Luftdurchlassabschnitt in allgemeinster Weise.

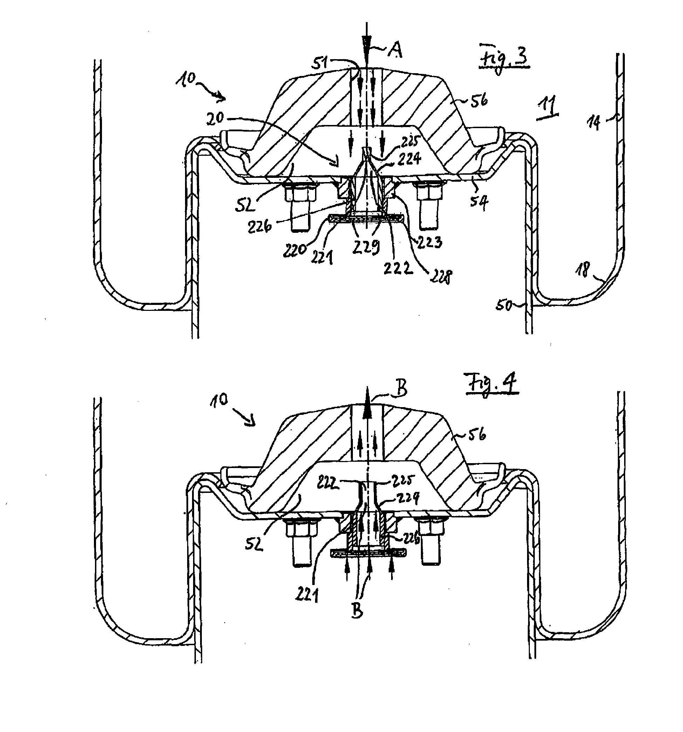

Die in Bezug auf die erste Ausführungsform erfolgte Beschreibung und Verwendung von Bezugszeichen gilt in analoger Weise für die zweite bis sechste Ausführungsform der Fig. 3 bis 12, außer wenn es anders angegeben ist oder sich aus technischer Hinsicht von selbst verbietet. Zur Vermeidung unnötiger Wiederholungen werden nachstehend vorwiegend solche Details beschrieben, bei denen sich die weiteren Ausführungsformen von der ersten Ausführungsform unterscheiden.

Fig. 3 und 4 zeigen eine zweite Ausführungsform des erfindungsgemäßen Luftbalgs 14, bei der ein ähnlich wie bei der ersten Ausführungsform ausgebildetes Ventil 220 im aufbauseitigen Endabschnitt 54 des Tauchkolbens 50 angeordnet ist. Der achsseitige Bereich 18 des Luftbalgs 14 ist dabei fest und druckluftdicht mit dem Bereich 56, der als elastomeres Pufferelement ausgebildet sein kann, und dem Endabschnitt 54 des Tauchkolbens verbunden. In ähnlicher Weise wie bei der ersten Ausführungsform ist ein elastischer Schlauch 224 in einem Ventilsitz 223 so angeordnet, dass der elastische Schlauch 224 eine Verbindung zum Innenraum 11 des Luftbalgs 14 herstellen kann. Dabei ist das ersten, aufbauseitige Ende 225 zum Innenraum 11 hin ausgerichtet, und das zweite, achsseitige Ende 226 des elastischen Schlauchs 224 ist zur Außenseite hin gerichtet. Bei der zweiten Ausführungsform kann sich das erste Ende soweit kontrahieren bzw. zusammenziehen, dass keine Luft durch den elastischen Schlauch 224 in den Innenraum 11 gelangen kann. Gemäß der zweiten Ausführungsform ragt das erste Ende 225 in eine Kammer 52, die im Endabschnitt 54 vorgesehen ist. Die Kammer 52 steht über einen Luftkanal 51 und dem Innenraum 11 des Luftbalgs 14 in Verbindung. Vom Ventilsitz 223 aus ragt eine Abdeckung 228 in den Innenraum des Tauchkolbens 50, wobei die Abdeckung 228 an ihrem unteren Ende parallel zum Endabschnitt 54 ausgebildet ist und Luftdurchtrittsöffnungen 229 aufweist, durch die in Öffnungsstellung des Ventils 220 Luft hindurchtreten kann. Dieser Zustand ist in Fig. 4 dargestellt, wobei die Luftströmung durch Pfeile B angedeutet ist. Die Luft durchströmt dabei eine Öffnung 221, die durch einen entsprechenden Überdruck im Innenraum des Tauchkolbens 50 in dem elastischen Schlauch 224 gebildet wird. Sobald ein Druckausgleich stattgefunden hat oder der Überdruck im Innenraum des Tauchkolbens 50 nicht mehr groß genug ist, zieht sich der elastische Schlauch 224 wieder zusammen und bildet eine luftdichte Absperrung des Tauchkolbens zum Innenraum 11 des Luftbalgs 14 hin. Der in dieser statischen Situation wirkende Druck wird durch die Pfeile A in Fig. 3 angedeutet.

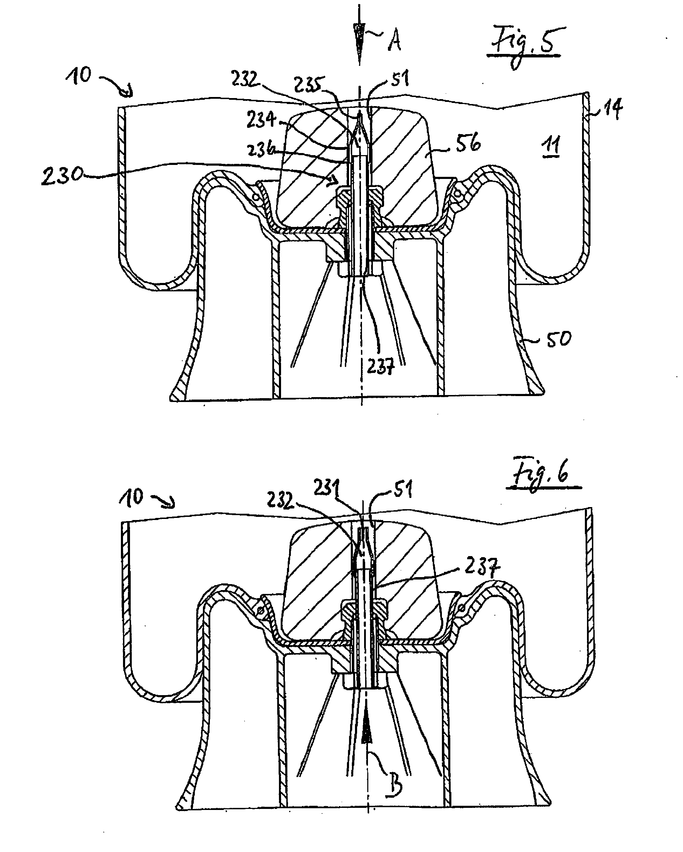

In den Fig. 5 und 6 ist eine dritte Ausführungsform des erfindungsgemäßen Luftbalgs 14 dargestellt, wobei Fig. 5 die Schließstellung des darin enthaltenen Ventils 230 zeigt, während Fig. 6 die Öffnungsstellung des Ventils 230 zeigt. Abweichend von der zweiten Ausführungsform ist das Ventil 230 durch einen elastischen Schlauch 234 auf ein Röhrchen 237 aufgesteckt, da es eine Verbindung zwischen dem Innenraum des Tauchkolbens 15 und dem Innenraum des Luftbalgs 11 herstellt und hierzu den Endabschnitt 54 des Tauchkolbens 50 durchsetzt. Die Funktionsweise des Ventils 230 mit seinem ersten, aufbauseitigen Ende 235 und seinem zweiten achsseitigen Ende 236 sowie die entsprechende Druck- bzw. Strömungssituation mit den entsprechenden Pfeilen A und B ist wie bei der zweiten Ausführungsform. Der elastische Schlauch 234 sowie der Abschnitt des Röhrchens 237, auf den er aufgestülpt bzw. aufgesetzt ist, befinden sich in einem Luftkanal 51, der im - vorzugsweise als elastomeres Pufferelement ausgebildeten - aufbauseitigen Bereich 56 des Tauchkolbens 50 vorgesehen ist.

Der elastische Schlauch 214, 224 bzw. 234 besteht vorzugsweise aus einem elastischen Gummi oder einem anderen elastischen Material mit geeigneten Eigenschaften.

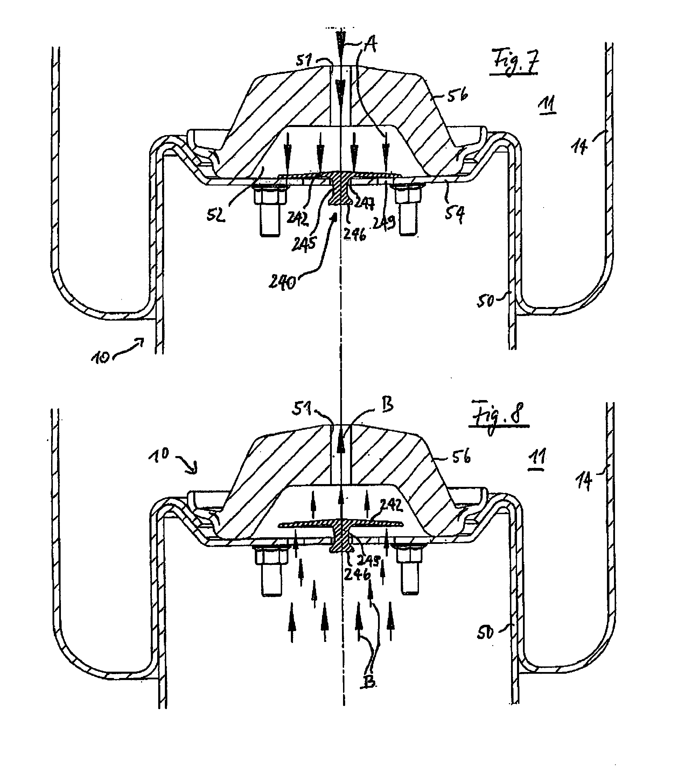

Fig. 7 und 8 zeigen eine vierte Ausführungsform des erfindungsgemäßen Luftbalgs 14, die mit einem Ventil 240 versehen ist. Das Ventil 240 ist wie bei der zweiten und dritten Ausführungsform auf der Symmetrieachse des Luftbalgs 14 angeordnet und hier als im Wesentlichen tellerförmiges, axial verschiebbares Verschlussteil 242 ausgebildet. Das Verschlussteil 242 ist in einer Kammer 52 angeordnet, die durch den - vorzugsweise als elastomeres Pufferelement ausgebildeten - aufbauseitigen Bereich 56 und den Endabschnitt 54 des Tauchkolbens 50 definiert bzw. begrenzt ist,und weist einen sich in Axialrichtung erstreckenden zentralen Führungsabschnitt 245 auf, der in einem verdickten Endabschnitt 242 endet. Der zentrale Führungsabschnitt 245 ist in einer den Endabschnitt 54 des Tauchkolbens 50 axial durchsetzenden Führungsbohrung 247 geführt, und der verdickte Endabschnitt 246 befindet sich außerhalb der Kammer 52. Dadurch ist das Verschlussteil 242 unverlierbar in der Kammer 52 beweglich gelagert. Sofern in dem Innenraum 11 des Luftbalgs 14 ein Überdruck gegenüber dem Innenraum des Tauchkolbens 50 herrscht, wird das Verschlussteil 242 auf den Endabschnitt 54 gedrückt und verschließt Luftdurchtrittsöffnungen 249, welche den Endabschnitt 54 vom Innenraum des Tauchkolbens 50 zur Kammer 52 hin durchsetzen. Sobald genügend Überdruck im Innenraum des Tauchkolbens 50 vorhanden ist, wird das Verschlussteil 242 von dem Endabschnitt 54 weg axial zum aufbauseitigen Ende der Kammer 52 versetzt, und Luft kann gemäß den Pfeilen B durch die Luftdurchtrittsöffnung 249 in die Kammer 52 und von dort aus über einen Luftkanal 51 in den Innenraum 11 des Luftbalgs 14 strömen.

Das Verschlussteil 242 besteht vorzugsweise aus einem elastischen Gummi oder einem anderen elastischen Material mit geeigneten Eigenschaften.

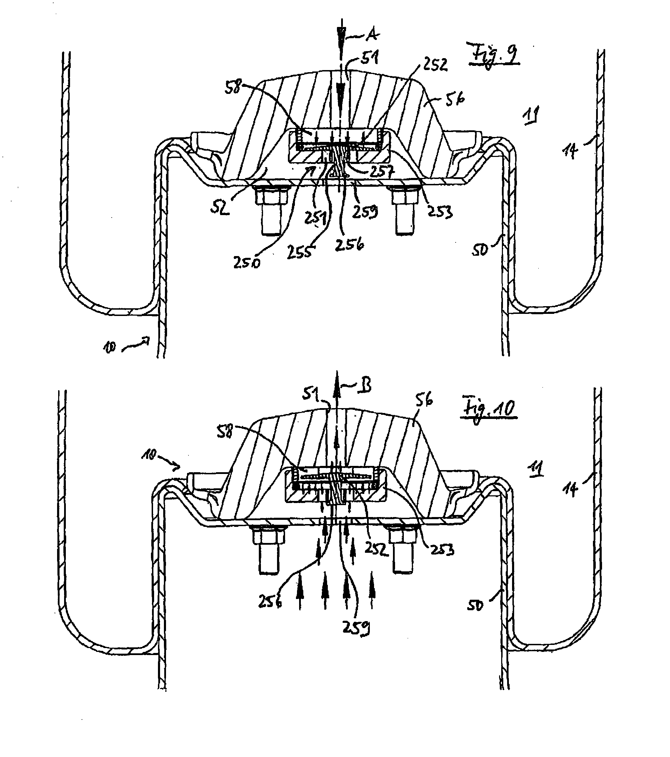

Die Fig. 9 und 10 zeigen eine fünfte, der vierten Ausführungsform ähnliche Ausführungsform der vorliegenden Erfindung. Ein Ventil 250 ist in ähnlicher Weise wie bei der vierten Ausführungsform mit einem Verschlussteil 252, einem zentralen Führungsabschnitt 245, einem verdickten Endabschnitt 246 sowie einer Führungsbohrung 247 ausgebildet. Der Unterschied zur vierten Ausführungsform besteht vor allem darin, dass das Ventil 250 vollständig innerhalb der Kammer 52 angeordnet ist, die durch den - vorzugsweise als elastomeres Pufferelement ausgebildeten - aufbauseitigen Bereich 56 und den Endabschnitt 54 des Tauchkolbens 50 definiert bzw. begrenzt ist. In einem Ventilsitz 253 ist eine Ausnehmung 58 im aufbauseitigen Bereich 56 des Tauchkolbens 50 vorgesehen, in der sich das Verschlussteil 252 bewegen kann. Luftdurchtrittsöffnungen 261 durchsetzen den Ventilsitz 253 und bilden somit eine Verbindung zwischen der Ausnehmung 58 und der Kammer 52, wobei die Kammer 52 über eine den Endabschnitt 54 durchsetzende Luftdurchtrittsöffnung 259 mit dem Innenraum des Tauchkolbens 50 in Verbindung steht. Die Ausnehmung 58 wiederum steht über einen Luftkanal 51 mit dem Innenraum 11 des Luftbalgs 14 in Verbindung. Die Bewegung des Ventils 250 aus der Öffnungs- und Schließstellung und umgekehrt erfolgt in sehr ähnlicher Weise wie bei der vierten Ausführungsform.

Das Verschlussteil 252 besteht vorzugsweise aus einem elastischen Gummi oder einem anderen elastischen Material mit geeigneten Eigenschaften.

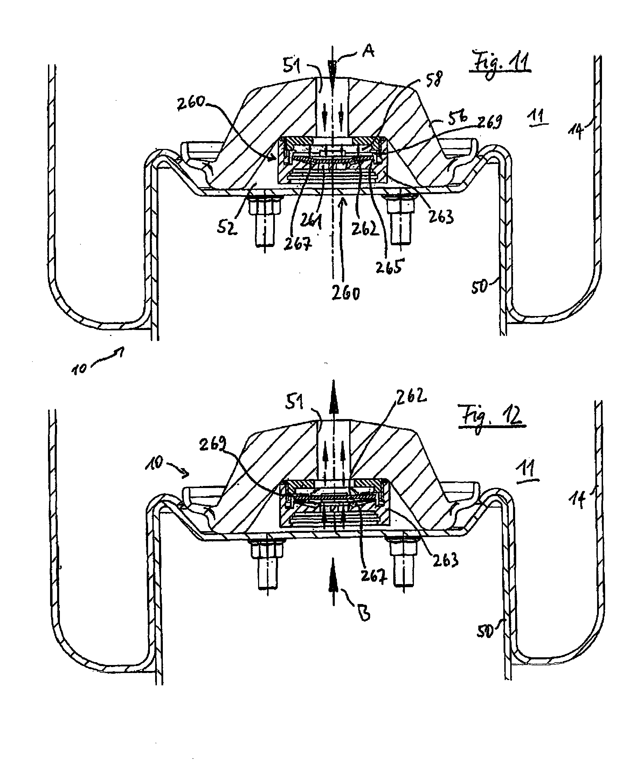

Fig. 11 und 12 zeigen eine sechste Ausführungsform der Erfindung. In ähnlicher Weise wie bei der fünften Ausführungsform ist ein Ventil 260 in einer Ausnehmung 58 eines Ventilsitzes 263 gebildet, wobei der Ventilsitz 263 in einer Kammer 52 ausgebildet ist, die durch den - vorzugsweise als elastomeres Pufferelement ausgebildeten - aufbauseitigen Bereich 56 und den Endabschnitt 54 des Tauchkolbens 50 definiert bzw. begrenzt ist. Eine Membran 262 ist in einer Membranhalterung 265, welche Teil des Ventilsitzes 263 ist, gehaltert. Die Ausnehmung 58 oberhalb der Membran 262 steht über einen Luftkanal 51 mit dem Innenraum 11 des Luftbalgs 14 in Verbindung. Unterhalb der Membran 262 sind Luftdurchtrittsöffnungen 261 vorgesehen, welche den Ventilsitz 263 axial durchsetzen und eine Verbindung des Raums 267 unterhalb der Membran 262 mit der Kammer 52 herstellen. Die Kammer 52 wiederum ist über nicht eigens zeichnerisch dargestellte Luftdurchtrittsöffnungen mit dem Innenraum des Tauchkolbens 50 verbunden. Bei entsprechendem Unterdruck im Innenraum 11 des Luftbalgs 14 ist die Membran 262, wie sie in Fig. 12 dargestellt ist, im Wesentlichen nicht ausgelenkt in der Membranhalterung 265 eingespannt. Über Luftkanäle 269, welche die Membranhalterung 265 durchsetzen und eine Verbindung zwischen dem Raum 267 und der Ausnehmung 58 herstellen, kann Luft dann, wenn die Membran 262 nicht ausgelenkt ist, vom Innenraum des Tauchkolbens 50 über die Luftdurchtrittsöffnungen 261 und den Raum 267 in die Ausnehmung 58 sowie über den Luftkanal 51 weiter in den Innenraum 11 des Federbalgs 14 gelangen. Nimmt aber der Druck im Innenraum 11 des Federbalgs 14 um ein bestimmtes Maß zu, wird die Membran 262 so weit nach unten ausgelenkt, dass sie die Luftdurchtrittsöffnungen 261 verschließt. Diese Schließstellung in Fig. 11 gezeigt. Durch die in der Ausnehmung 58 bzw. der Kammer 52 vorgesehene Anbringung der Membran 262 ist ein sehr guter Schutz des Ventils 262 vor Störungseinflüssen wie beispielsweise Schmutz oder mechanischen Einflüssen gewährleistet.

Die Membran 262 wird vorzugsweise aus einem elastischen Gummimaterial oder einem anderen geeigneten Material mit ausreichender Elastizität hergestellt.

Der erfindungsgemäße Federbalg wird üblicherweise mit einer relativ weichen Federhärte ausgestaltet und ist somit in der Regel für die Federung selbst unwesentlich. Mit dem Federbalg wird somit nur die Höhe des Fahrzeugs über der Achse eingestellt, während die Dämpfung über geeignete Lenker erfolgt.

Es versteht sich von selbst, dass einzelne Merkmale bestimmter Ausführungsformen wie beispielsweise der Ort und die genaue Ausgestaltung einzelner Teile des Ventils auch bei anderen Ausführungsformen realisiert werden können, sofern dies nicht in der Beschreibung ausdrücklich ausgeschlossen ist oder sich aus technischen Gründen von selbst verbietet.

### Bezugszeichenliste

- 10: Luftfeder
- 11: Innenraum
- 12: Druckluftöfifnung
- 13: Druckluftleitung
- 14: Luftbalg
- 16: aufbauseitiger Bereich
- 18: achsseitiger Bereich
- 20: Ventil
- 30: Endabschnitt
- 50: Tauchkolben
- 51: Luftkanal
- 52: Kammer
- 54: Endabschnitt
- 56: aufbauseitiger Bereich
- 58: Ausnehmung
- 210: Ventil
- 211: Öffnung
- 212: Düse
- 213: Ventilsitz
- 214: elastischer Schlauch
- 215: erstes Ende
- 216: zweites Ende
- 218: Abdeckung
- 219: Luftdurchtrittsöffnung
- 220: Ventil
- 221: Öffnung
- 222: Düse
- 223: Ventilsitz
- 224: elastischer Schlauch
- 225: erstes Ende
- 226: zweites Ende
- 228: Abdeckung
- 229: Luftdurchtrittsöffnung
- 230: Ventil
- 231: Öffnung
- 232: Düse
- 234: elastischer Schlauch
- 235: erstes Ende
- 236: zweites Ende
- 237: Röhrchen
- 240: Ventil
- 241: Luftdurchtrittsöffnung
- 242: Verschlussteil
- 245: zentraler Führungsabschnitt
- 246: verdickter Endabschnitt
- 247: Führungsbohrung
- 249: Luftdurchtrittsöffnung
- 250: Ventil
- 251: Luftdurchtrittsöffnung
- 252: Verschlussteil
- 253: Ventilsitz
- 255: zentraler Führungsabschnitt
- 256: verdickter Endabschnitt
- 257: Führungsbohrung
- 259: Luftkanal
- 260: Ventil
- 261: Luftdurchtrittsöffnung
- 262: Membran
- 263: Ventilsitz
- 265: Membranhalterung
- 267: Raum
- 269: Luftkanal

## Patentansprüche

1. Luftbalg (14) für eine Luftfeder (10) insbesondere eines Nutzfahrzeugs, mit
- einem achsseitigen Bereich (18) und einem aufbauseitigen Bereich (16), wobei der achsseitige Bereich (18) an einem Tauchkolben (50) anordenbar und durch eine Ein- bzw. Ausfederbewegung zwischen einer ersten, eingefederten, Position und einer zweiten, ausgefederten, Position bewegbar ist, und
- einem Innenraum (11), der über eine an eine Druckluftleitung (13) angeschlossene Druckluftöffnung (12) mit Druckluft befüllbar ist,
ferner aufweisend ein mit der Atmosphäre in Verbindung stehendes Ventil (20) zur Belüftung des Innenraums (11), das durch im Innenraum (11) befindliche Druckluft in seine Schließstellung beaufschlagbar ist,
wobei sich das Ventil (20) vollständig innerhalb einer im bzw. am Tauchkolben (50) vorgesehenen Kammer (52) befindet.

2. Luftbalg (14) nach Anspruch 1,
wobei das Ventil (20) ein Einwegeventil ist.

3. Luftbalg (14) nach Anspruch 1 oder 2,
wobei der Luftbalg (14) an seinem aufbauseitigen Bereich (16) durch einen Endabschnitt (30) abgeschlossen ist.

4. Luftbalg (14) nach einem der vorhergehenden Ansprüche,
wobei der Luftbalg (14) mit dem Tauchkolben (50) fest verbunden ist und das Ventil (20) in dem Tauchkolben (50) angeordnet ist, vorzugsweise einem Endabschnitt (54), der einen aufbauseitigen Bereich (56) des Tauchkolbens (50) abschließt.

5. Luftbalg (14) nach einem der vorhergehenden Ansprüche,
wobei der Luftbalg (14) zumindest im Wesentlichen rotationssymmetrisch zu einer Symmetrieachse ausgebildet ist und sich das Ventil (20) auf der Symmetrieachse befindet.

6. Luftbalg (14) nach einem der vorhergehenden Ansprüche,
wobei das Ventil (220; 230) eine durch einen elastischen Schlauch (224; 234) gebildete Düse (222; 232) umfasst, deren Öffnung (221; 231) durch Kontraktion eines Endes des elastischen Schlauchs (224; 234) verschließbar ist.

7. Luftbalg (14) nach einem der Ansprüche 1 bis 5,
wobei das Ventil (240; 250) ein zumindest im Wesentlichen tellerförmiges, in Axialrichtung des Luftbalgs (14) bewegliches Verschlussteil (242; 252) für mindestens eine Luftdurchtrittsöffnung (249; 251) umfasst.

8. Luftbalg (14) nach einem der Ansprüche 1 bis 5,
wobei das Ventil (260) eine elastische Membran (262) zum Verschließen mindestens einer Luftdurchtrittsöffnung (261) umfasst.

9. Luftbalg (14) nach Anspruch 6,
wobei das Ventil (220; 230) eine den Luftzutritt nicht beeinträchtigende Abdeckung (228) aufweist.

10. Luftfeder (10) mit einem Tauchkolben (50) und einem mit dem Tauchkolben (50) verbundenen Luftbalg (14) nach einem der vorhergehenden Ansprüche, wobei die Luftfeder (10) mit einer Druckluftquelle (P) verbunden ist.

11. Luftfedersystem, insbesondere für Nutzfahrzeuge, mit
einer Mehrzahl von Luftfedern (10) gemäß Anspruch 10 und
zumindest einer Druckluftquelle (P), wobei zumindest ein Teil der Luftfedern (10) mit der gleichen Druckluftquelle (P) verbunden ist.

## Claims

1. An air bellows (14) for a pneumatic spring (10), in particular of a commercial vehicle, comprising
- an axle-side region (18) and a body-side region (16), wherein the axle-side region (18) can be arranged on a plunger (50) and moved by means of a compression or extension movement between a first, compressed position and a second, extended position, and
- an interior space (11), which can be filled with compressed air via a compressed air opening (12) that is connected to a compressed air line (13),
further comprising a valve (20) connected to the atmosphere for ventilating the interior space (11), which can be moved into its closed position by applying compressed air present in the interior space (11) to the valve,
wherein the valve (20) is located entirely within a chamber (52) provided in or on the plunger (50).

2. The air bellows (14) of claim 1,
wherein the valve (20) is a one-way valve.

3. The air bellows (14) of claim 1 or 2,
wherein the air bellows (14) is closed at its body-side region (16) by an end portion (30).

4. The air bellows (14) of any one of the preceding claims,
wherein the air bellows (14) is fixedly connected to the plunger (50), and the valve (20) is arranged in the plunger (50), preferably an end portion (54), which closes a body-side portion (56) of the plunger (50).

5. The air bellows (14) of any one of the preceding claims,
wherein the air bellows (14) is designed at least essentially rotation symmetric to an axis of symmetry, and the valve (20) is located on the axis of symmetry.

6. The air bellows (14) of any one of the preceding claims,
wherein the valve (220; 230) comprises a nozzle (222; 232) formed by an elastic tube (224; 234), the opening (221; 231) of which may be closed by contracting one end of the elastic tube (224; 234).

7. The air bellows (14) of any one of claims 1 to 5,
wherein the valve (240; 250) comprises an at least essentially plate-shaped closing piece (242; 252) for at least one air opening (249; 251), which is movable in the axial direction of the air bellows (14).

8. The air bellows (14) of any one of claims 1 to 5,
wherein the valve (260) comprises an elastic membrane (262) for closing at least one air opening (261).

9. The air bellows (14) of claim 6,
wherein the valve (220; 230) comprises a cover (228) which does not hinder the inflow of air.

10. A pneumatic spring (10) with a plunger (50) and an air bellows (14) connected to the plunger (50) according to any one of the preceding claims, wherein the pneumatic spring (10) is connected to a source of compressed air (P).

11. Pneumatic spring system, in particular for commercial vehicles, with a plurality of pneumatic springs (10) according to claim 10, and
at least one source of compressed air (P), wherein at least a part of the pneumatic springs (10) is connected to the same source of compressed air (P).

## Revendications

1. Soufflet à air (14) pour un ressort pneumatique (10), en particulier d'un véhicule utilitaire, comprenant
- une zone côté essieu (18) et une zone côté superstructure (16), telles que la zone côté essieu (18) est susceptible d'être agencée sur un piston plongeur (50) et est susceptible d'être déplacée par un mouvement de débattement en rétraction ou en déploiement entre une première position rétractée et une seconde position déployée, et
- une chambre intérieure (11), qui peut être remplie avec de l'air comprimé via une ouverture à air comprimé (12) raccordée à une conduite d'air comprimé (13),
comportant en outre une valve (20) en communication avec l'atmosphère pour la mise à l'air de la chambre intérieure (11), valve qui peut être sollicitée vers sa position de fermeture par l'air comprimé qui se trouve dans la chambre intérieure (11),
et la valve (20) se trouve entièrement à l'intérieur d'une chambre (52) prévue dans ou sur le piston plongeur (50).

2. Soufflet à air (14) selon la revendication 1,
dans lequel la valve (20) est un clapet antiretour.

3. Soufflet à air (14) selon la revendication 1 ou 2,
dans lequel le soufflet à air (14) est refermé par un tronçon terminal (30) au niveau de sa zone côté superstructure (16).

4. Soufflet à air (14) selon l'une des revendications précédentes,
dans lequel le soufflet à air (14) est fermement relié avec le piston plongeur (50) et la valve (20) est agencée dans le piston plongeur (50), de préférence dans un tronçon terminal (54) qui obture une zone côté superstructure (56) du piston plongeur (50).

5. Soufflet à air (14) selon l'une des revendications précédentes,
dans lequel le soufflet à air (14) est réalisé au moins sensiblement à symétrie de révolution par rapport à un axe de symétrie, et la valve (20) se trouve sur l'axe de symétrie.

6. Soufflet à air (14) selon l'une des revendications précédentes,
dans lequel la valve (220 ; 230) comporte une buse (222 ; 232) formée par un tuyau élastique (224 ; 234), dont l'ouverture (221 ; 231) est susceptible d'être obturée par contraction d'une extrémité du tuyau élastique (224 ; 234).

7. Soufflet à air (14) selon l'une des revendications 1 à 5,
dans lequel la valve (240 ; 250) comporte une pièce d'obturation (242 ; 252), au moins sensiblement en forme de plaque et mobile en direction axiale du soufflet à air (14), pour au moins une ouverture de passage d'air (249 ; 251).

8. Soufflet à air (14) selon l'une des revendications 1 à 5,
dans lequel la valve (260) comporte une membrane élastique (262) pour obturer au moins une ouverture de passage d'air (261).

9. Soufflet à air (14) selon la revendication 6,
dans lequel la valve (220 ; 230) comporte une couverture (228) qui n'entrave pas l'entrée d'air.

10. Ressort pneumatique (10) comprenant un piston plongeur (50) et un soufflet à air (14) selon l'une des revendications précédentes, relié au piston plongeur (50), dans lequel le ressort pneumatique (10) est relié à une source d'air comprimé (P).

11. Système à ressort pneumatique, en particulier pour véhicules utilitaires, comprenant une pluralité de ressorts pneumatiques (10) selon la revendication 10, et au moins une source d'air comprimé (P), dans lequel au moins une partie des ressorts pneumatiques (10) sont reliés à la même source d'air comprimé (P)
